# EUROPÄISCHE PATENTSCHRIFT

(11) **EP 2 896 443 B1**
(45) Veröffentlichungstag und Bekanntmachung des Hinweises auf die Patenterteilung: **03.03.2021**
(21) Anmeldenummer: 14151789.6
(22) Anmeldetag: 20.01.2014
(51) Int. Cl.: B01D 21/04, B01D 21/20, B01D 21/24, B01D 21/34, B24C 9/00, B65G 25/00, B23Q 11/10

(54) **Abscheidevorrichtung zum Abscheiden von Material aus einer Flüssigkeit**
Separating device for separating material from a liquid
Dispositif de séparation pour la séparation de matière à partir d'un liquide

(43) Veröffentlichungstag der Anmeldung: 22.07.2015
(73) Patentinhaber: Laserjet 2000 AG, 3178 Bösingen (CH)
(72) Erfinder: Müller, Jürg, 4805 Brittnau (CH)
(74) Vertreter: AMMANN PATENTANWÄLTE AG

(56) Entgegenhaltungen:
- GB-A- 2 371 243
- JP-A- H08 252 743
- JP-A- 2010 155 322
- US-A- 2 941 668
- US-A- 4 151 082

## Beschreibung

Die Erfindung bezieht sich auf eine Abscheidevorrichtung zum Abscheiden von Material aus einer Flüssigkeit.

Bei verschiedenen Anwendungszwecken fallen Flüssigkeiten an, aus denen Material abzuscheiden ist. So wird z. B. beim Wasserstrahlschneiden Sand als Abrasivmaterial dem Wasser zugesetzt. Es ist bekannt, zur Reinigung eine Art Sack zu verwenden, via welchen das Wasser geleitet wird, so dass sich der Sand im Sack absetzen kann. Das Wasser läuft dabei über den Rand des Sackes über und fliesst zu Boden. Diese Art der Reinigung ist wenig effizient.

Auch bei anderen Bearbeitungsmaschinen, beispielsweise beim Schleifen, Bohren, etc. fallen Flüssigkeiten an, aus denen Material in Form von Spänen und dergleichen abzuscheiden ist. Auch hier ist eine effiziente Reinigung erstrebenswert

Vergleichbare Vorrichtungen, die eine effiziente Reinigung anstreben, sind in der GB 2 371 243, der JP 2010 155322, der JP H08 252743, der US 2 941 668 und der US 4 151 082 offenbart.

Es ist eine Aufgabe der vorliegenden Erfindung, eine Abscheidevorrichtung anzugeben, welche ein effizientes Abscheiden von Material aus einer Flüssigkeit ermöglicht.

Diese Aufgabe wird durch die Abscheidevorrichtung gemäss dem unabhängigen Vorrichtungsanspruch gelöst. Die weiteren Ansprüche geben bevorzugte Ausführungen der erfindungsgemässen Abscheidevorrichtung, eine Verwendung einer derartigen Abscheidevorrichtung sowie eine Anlage mit einer erfindungsgemässen Abscheidevorrichtung an.

Durch das Vorsehen einer Fördereinrichtung mit einem Förderelement, welches mittels eines Antriebs entlang des Bodens führbar ist und zur Aufnahme und Herausfördern von Material eingerichtet ist, ist eine effiziente Abscheidung erzielbar.

Die Abscheidevorrichtung ist so gestaltbar, dass der Verschleiss an mechanischen Teilen reduziert ist, insbesondere dann, wenn die Fördereinrichtung so ausgelegt wird, dass das Förderelement als einziges mechanisches Teil vorgesehen ist, welches sich in der Flüssigkeit befindet.

Die Erfindung wird im Folgenden anhand von Ausführungsbeispielen unter Bezugnahme auf Figuren erläutert.

Es zeigen
Fig. 1 eine erfindungsgemässe Abscheidevorrichtung in einer perspektivischen Ansicht,
Fig. 2 die Vorrichtung aus Fig. 1 in einer teilweise geschnittenen Seitenansicht zusammen mit einem Sammelbehälter,
Fig. 3 die Vorrichtung aus Fig. 2 in einer Vorderansicht,
Fig. 4 eine Ausführungsform des Förderelements für die Vorrichtung gemäss Fig. 1 in einer perspektivischen Ansicht,
Fig. 5 das Förderelement aus Fig. 4 in einer Seitenansicht, und
Fig. 6 das Förderelement aus Fig. 4 in einer Draufansicht.

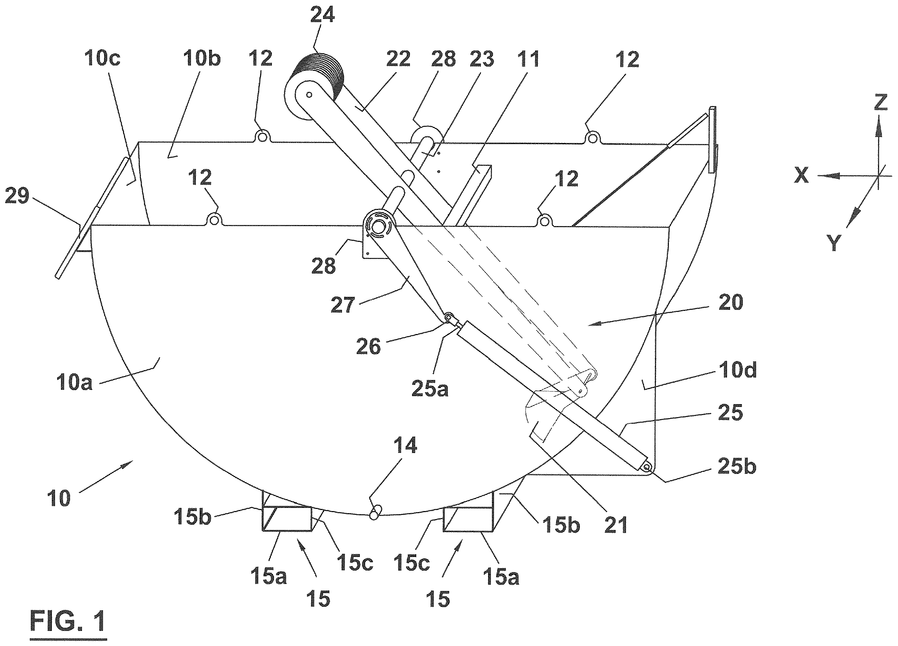

Wie Fig. 1 zeigt, umfasst die Abscheidevorrichtung ein auf dem Boden gestelltes Becken 10 sowie eine daran angeordnete Fördereinrichtung 20.

Das Becken 10 dient als Wanne, in welche Flüssigkeit mit dem abzuscheidendem Material einleitbar ist, sodass sich dieses am Beckenboden absetzen kann. Die Fördereinrichtung 20 ist zur Aufnahme und Herausfördern aus dem Becken 10 eingerichtet.

Das Becken 10 ist hier aus zwei Seitenwänden 10a, 10b gebildet, die über eine Bodenwand 10c verbunden sind. Es ist oben offen ausgestaltet, so dass die Flüssigkeit oberhalb des Beckenrandes z. B. über ein (nicht dargestelltes) Einleitrohr in das Becken 10 einleitbar ist. Die Wände 10a, 10b, 10c sind beispielsweise aus Platten oder Blechen gefertigt, die zusammengefügt werden. Optional sind die Seitenwände 10a, 10b durch weitere Verbindungsmittel miteinander verbunden, wie z. B. hier mit einem Zwischenelement 11, das im oberen Bereich des Beckens 10 angeordnet ist und diesem zusätzliche Stabilität verleiht.

Das Becken 10 weist Anschlussmittel 12 auf, an welche eine Hebevorrichtung anschliessbar ist, um das Becken 10 bei Bedarf anzuheben und zu verschieben. Die Anschlussmittel 12 sind hier in Form von Ösen 12 ausgebildet, die an den Seitenwänden 10a, 10b angeformt sind. In die Ösen 12 sind z. B. Haken eines Krans einhängbar.

Die Bodenwand 10c ist gekrümmt ausgebildet, so dass die Innenseite eine kreiszylindrische Fläche aufweist, entlang welcher ein Förderelement 21 der Fördereinrichtung 20 führbar ist.

Das Becken 10 weist am Fuss einen Auslass 14 auf, welcher bei Bedarf geöffnet werden kann, um das Becken 10 zu entleeren.

Die Unterseite der Wanne 10 liegt auf einem Auflager auf, welches hier durch Rohre 15 gebildet ist. Das jeweilige Rohr 15 weist eine flache Unterseite 15a auf sowie zwei Seitenflächen 15b, 15c. Die eine Seitenfläche 15b ist höher ausgebildet als die andere Seitenfläche 15c, sodass die gekrümmte Bodenwand 10c des Beckens 10 auf dem jeweiligen Rohr 15 entlang zweier Kanten aufliegt.

Die Fördereinrichtung 20 weist einen Arm 22 auf, welcher an einer Welle 23 gehalten ist und hier in Form von zwei parallel verlaufenden Stangen gebildet ist. Die Welle 23 ist um eine Drehachse drehbar, welche gemäss Fig. 1 in der Y-Richtung verläuft.

An dem einen Ende des Arms 22 befindet sich das Förderelement 21, an dem anderen Ende ist ein Gegengewicht 24 angeordnet, das beispielsweise durch eine oder mehrere Scheiben gebildet ist. Zur Ausbalancierung sind die Masse des Gegengewichts 24 und dessen Abstand zur Welle 23 auf die Masse des Förderelements 21 und dessen Abstand zur Welle 23 abgestimmt. Vorzugsweise ist diese Abstimmung so, dass eine geringe Kraft ausreicht, um den Arm 22 im leeren Zustand des Beckens 10, d. h. ohne Befüllung mit Flüssigkeit und Material, drehen zu können. Der Arm 22 ist somit in der Balance, so dass eine Förderung von abzuscheidendem Material mit wenig Kraft möglich ist.

Die Welle 23 ist an Lagerschalen 28 drehbar gelagert, die an den Seitenwänden 10a, 10b des Beckens 10 angeordnet sind. Zum Drehen der Welle 23 und somit des Arms 22 mit dem Förderelement 21 dient ein Antrieb 25. Dieser ist ausserhalb des Beckens 10 an dessen einen Seitenwand 10a angeordnet.

Der Antrieb ist hier als Linearantrieb 25 mit einer Linearachse 25a ausgebildet, die linear verschiebbar und an einen mit der Welle 23 fest verbundenen Drehhebel 27 angelenkt ist. Der Linearantrieb 25 ist um eine Drehstelle 25b verschwenkbar gelagert, so dass die Kopplungsstelle 26 der Linearachse 25a an den Drehhebel 27 auf einer Kreisbahn bewegbar ist. Die Drehstelle 25b ist hier an einer Platte 10d angeordnet, die über den Rand der Seitenwand 10a des Beckens 10 hinausragt.

Als Linearantrieb 25 ist z. B. ein pneumatischer Zylinder geeignet. Dieser ist hier beidseitig mit Druckluft beaufschlagbar und somit doppelwirkend.

Es sind auch andere Arten von Antrieben 25 zum Drehen der Welle denkbar, z. B. ein Drehantrieb. Auch kann der Antrieb 25 für verschiedene Betriebsweisen ausgelegt sein, pneumatisch, elektrisch, etc.

In Förderrichtung gesehen ausgangsseitig weist das Becken 10 eine Rutsche 29 auf, welche hier in Form eines Abgleitbleches ausgebildet und aussenseitig der Bodenwand 10c angebracht ist.

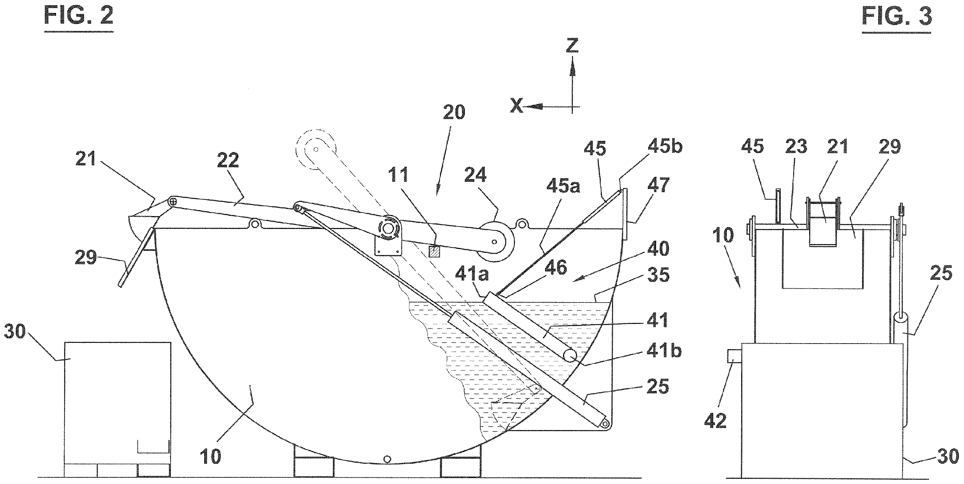

Wie Fig. 2 zeigt, befindet sich neben dem Becken 10 ein Auffangbehälter 30, oberhalb welcher sich die Rutsche 29 befindet. Dieser dient als Sammelstation, an welcher das abgeschiedene Material gesammelt wird.

In Fig. 2 ist auch die Einstelleinrichtung 40 zu sehen, welche eingerichtet ist, das Niveau 35 der Flüssigkeit einzustellen. Die Einstelleinrichtung 40 weist ein Rohr 41 auf, dessen eines Ende 41a offen ist und dessen anderes Ende 41b in einem Anschluss 42 mündet, das aus der Seitenwand 10b nach aussen ragt (vgl. Fig. 3) und zur Bildung des Rücklaufs dient. Je nach Auslegung der Abscheidevorrichtung befindet sich der Anschluss 42 auf einem genügend hohen Niveau, so dass allein der hydrostatische Druck ausreicht, um einen genügenden Rücklauf der Flüssigkeit zu gewährleisten. Bei Bedarf kann jedoch eine Pumpe vorgesehen sein, um die Flüssigkeit über den Anschluss 42 abzupumpen.

Das Ende 41b ist so gelagert und abgedichtet, dass das Rohr 41 um dieses schwenkbar ist. Beim Schwenken bewegt sich das Ende 41a auf einer Kreisbahn, so dass sich seine Höhe über der Basis des Beckens 10 ändert. Entsprechend ändert sich das Niveau 35 der Flüssigkeit, indem diese über das Ende 41a und den Anschluss 42 abgeleitet wird.

Zum Verschwenken des Rohrs 41 dient ein Antrieb, der hier als Linearantrieb 45 mit einer Linearachse 45a ausgebildet, die linear verschiebbar und an das Rohr 41 angelenkt ist. Der Linearantrieb 45 ist um eine Drehstelle 45b verschwenkbar gelagert, so dass die Kopplungsstelle 46 der Linearachse 45a an das Rohr 41 auf einer Kreisbahn bewegbar ist. Die Drehstelle 45b ist hier an einer Halterung 47 angeordnet, die am Becken 10 befestigt ist.

Als Linearantrieb 45 ist z. B. ein pneumatischer Zylinder geeignet, welcher hier beidseitig mit Druckluft beaufschlagbar und somit doppelwirkend ist. Es ist auch denkbar, einen elektrischen Antrieb 45 einzusetzen, um das Rohr 41 zu verschwenken.

Fig. 2 zeigt die Fördereinrichtung 20 in der Endstellung, bei welcher der Arm 22 über den Rand des Beckens 22 bewegt ist und sich das Förderelement 21 auf der Rutsche 29 befindet. Die Anfangsstellung, wie sie auch in Fig. 1 gezeigt ist, ist bei der Fig. 2 gestrichelt dargestellt. Die Fördereinrichtung 20 ist vorzugsweise so ausgestaltet, dass der Arm 22 und somit das Förderelement 21 um einen Winkel verschwenkbar sind, der grösser als 90 Grad und/oder kleiner als 180 Grad ist.

Wie aus der Vorderansicht gemäss Fig. 3 ersichtlich, ist das Förderelement 21 schmäler als die Breite des Beckens 10 ausgestaltet und etwa in dessen Mitte angeordnet. Das Becken 10 kann optional mit Leitwänden (in den Figuren nicht dargestellt) versehen sein, die entlang der Bewegungsbahn des Förderelements 21 angeordnet sind und das Material beim Absetzen am Boden des Beckens 10 zum Förderelement 21 hin leiten.

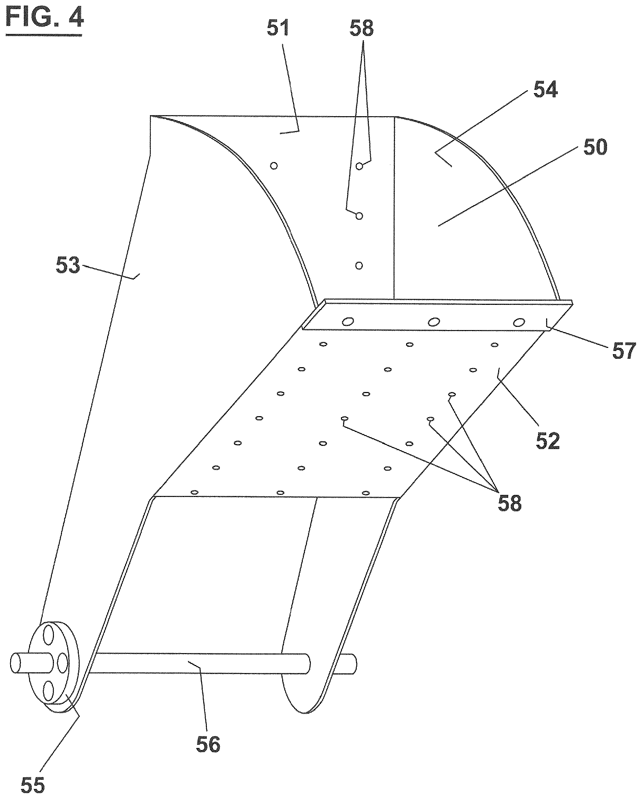

Das Förderelement 21 ist hier als Schaufel ausgebildet, welche in den Figuren 4-6 genauer dargestellt ist. Die Schaufel 21 weist einen Aufnahmeraum 50 auf, welche durch Platten 51-54 gebildet ist. Die Platten 51 und 52 sind V-förmig angeordnet und seitlich an den Platten 53 und 54 befestigt, welche endseitig mit Lager 55 versehen sind. Durch die Lager 55 verläuft eine Welle 56, die am Arm 22 der Fördereinrichtung 20 gehalten ist, so dass die Schaufel 21 um die Lager 55 drehbar ist. Die Schaufel 21 ist somit um zwei Achsen verschwenkbar, die durch die Wellen 23 und 56 gehen und die hier in Y-Richtung verlaufen.

Die Dimensionen der Schaufel 21, insbesondere der Abstand zwischen Welle 56 und Ende der Platte 52, sind so auf den Arm 22 abgestimmt, dass die Schaufel 21 in der in Fig. 2 gezeigten Endstellung über den Rand des Beckens 21 hinausragt und auf der Rutsche 29 zu liegen kommt. Die Position der Welle 56 ist so festgelegt, dass sich der Schwerpunkt der Schaufel 21 - gesehen in X-Richtung, d. h. in Richtung zur Rutsche 29 hin - vor der Welle 56 befindet und somit eine selbsttätige Kippbewegung der Schaufel 21 zur Rutsche 29 hin bewirkt wird.

Die Platte 52, welche der Bodenwand 10c des Beckens 10 zugewandt ist, ist am Rand mit einem Gleitteil 57 versehen. Dieses streift im Betrieb entlang der Bodenwand 10c und ist z. B. aus Kunststoff gefertigt. Weiter dient die Platte 52 als Gleitfläche, entlang welcher der Rand des Beckens 10 gleitet, wenn die Schaufel 21 zur Endstellung hin bewegt wird.

Die Schaufel 21 ist durchlässig ausgestaltet, so dass Flüssigkeit aus dem Aufnahmeraum 50 abfliessen kann. Zu diesem Zweck sind die Platten 51, 52 mit Löchern 58 versehen.

Die Abscheidevorrichtung ist wie folgt betreibbar:
Oberhalb des Beckens 10 wird ein Einleitrohr positioniert zum Einleiten der Flüssigkeit mit dem abzuscheidenden Material und zur Bildung des Rücklaufs wird ein Rohr an den Anschluss 42 angeschlossen. Das Rohr 41 wird so verschwenkt, dass sich das gewünschte Niveau 35 im Becken 10 einstellt. Durch Betätigen des Antriebs 25 wird das Förderelement 21 von der Ausgangsstellung zur Endstellung bewegt. Das Förderelement 21 nimmt dabei beim Führen entlang der Bodenwand 10c Material auf, das sich dort abgesetzt hat.

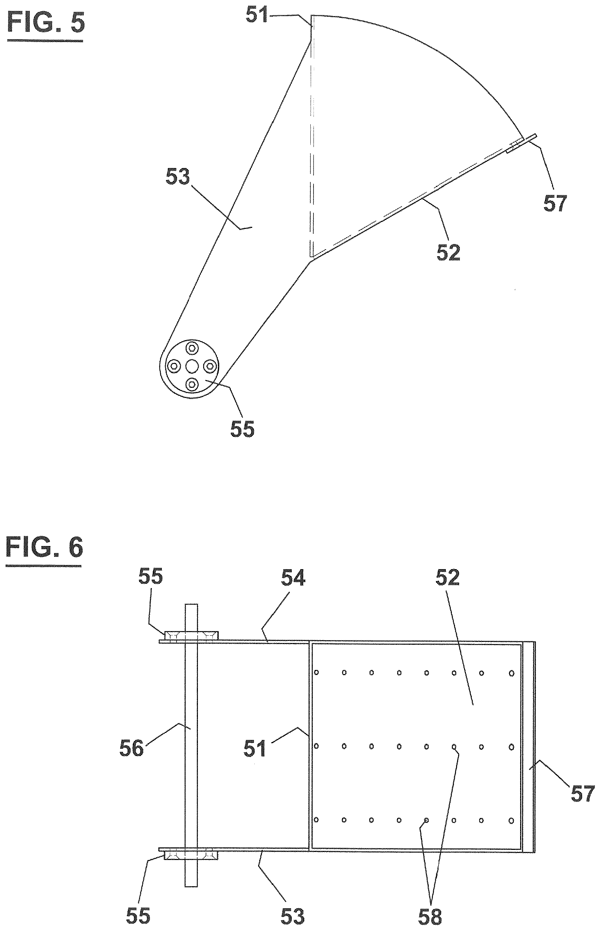

Die Steuerung der Abscheidevorrichtung ist vorzugsweise so eingerichtet, dass die Bewegung des Förderelements 21 abgebremst wird, wenn es sich zur Endstellung hinbewegt. Dadurch kann Flüssigkeit, welches zusammen mit dem Material vom Förderelement 21 aufgenommen worden ist, aus den Löchern 58 abfliessen, sobald dieses über das Niveau 35 der Flüssigkeit bewegt wird. Das Förderelement 21 ist dabei so weit verschwenkt, dass es im Wesentlichen in der Vertikalen verläuft und sich somit die Öffnung des Aufnahmeraums 50 oben befindet (vgl. Fig. 5).

Bei der Weiterbewegung des Förderelements 21 erreicht die entlang der Bodenwand 10c geführte Kante des Förderelements 21 (vgl. Gleitteil 57 in Fig. 5) den Rand des Beckens 10, und anschliessend gleitet die Unterseite des Förderelements 21 (Platte 52 in Fig. 5) entlang des Beckenrandes. Das Förderelement 21 beginnt dabei über den Beckenrand hinauszuragen und kippt aufgrund des nach vorne versetzten Schwerpunktes langsam nach vorne.

Der Arm 22 wird schliesslich so weit verschwenkt, bis das Förderelement 21 auf der Rutsche 29 zu liegen kommt. Die Öffnung in den Aufnahmeraum 50 des Förderelements 21 ist nun nach unten gerichtet, sodass aufgrund der Schwerkraft das Material aus dem Förderelement 21 heraus in den Auffangbehälter 30 fällt.

Das Förderelement 21 wird anschliessend wieder in die Anfangsstellung bewegt und der Zyklus beginnt von vorne. Die Anzahl Zyklen pro Zeiteinheit ist dabei auf den entsprechenden Anfall an Material eingestellt.

Die Abscheidevorrichtung ist vielseitig einsetzbar, um Material, welches sich in einer Flüssigkeit absetzt, abzuscheiden. Typischerweise sind dies Feststoffe, die eine grössere Dichte als die Flüssigkeit haben.

Die Abscheidevorrichtung ist z. B. bei Wasserstrahlschneidemaschinen verwendbar, bei welchen dem Wasser Abrasivmaterial in Form von beispielsweise Sand zugefügt wird zur Bildung eines besonders wirksamen Schneidstrahls. Die Abscheidevorrichtung wird im Wasserkreislauf zwischen Auffangbecken, wo bei der Bearbeitung das Wasser mit Abrasivmaterial aufgefangen wird, und Zufuhr von Wasser zur Düse angeordnet. Mittels einer Pumpe wird das Wasser mit Abrasivmaterial aus dem Auffangbecken in das Becken 10 geleitet, das Abrasivmaterial abgeschieden und das gereinigte Wasser über den Anschluss 42 zurück zur Wasserzufuhr der Maschine geleitet.

Die Abscheidevorrichtung ist auch bei anderen Arten von Bearbeitungsmaschinen verwendbar, um beispielsweise Späne, Schleifpartikel und dergleichen aus der Schmierflüssigkeit abzuscheiden.

Das Fassungsvermögen des Beckens 10 ist an den jeweiligen Anwendungszweck ausgelegt, d.h. es ist variabel an die Anwendung angepasst, und kann z. B. mindestens 1 m³, mindestens 2 m³ oder mehr betragen.

Aus der vorangehenden Beschreibung sind dem Fachmann zahlreiche Abwandlungen zugänglich, ohne den Schutzbereich der Erfindung zu verlassen, der durch die Ansprüche definiert ist.

## Patentansprüche

1. Abscheidevorrichtung zum Abscheiden vom Material aus einer Flüssigkeit, mit einer Wanne (10), durch welche die Flüssigkeit hindurchleitbar ist und welche einen Boden (10c) aufweist, auf welchem sich das Material im Betrieb ansammelt, und mit einer Fördereinrichtung (20), welche ein Förderelement (21) aufweist, welches mittels eines Antriebs (25) entlang des Bodens (10c) führbar ist und zur Aufnahme von am Boden angesammeltem Material und Herausfördern von diesem aus der Wanne (10) eingerichtet ist, wobei das Förderelement (21) eine Schaufel ist, welche um mindestens zwei Achsen (23, 56) verschwenkbar gelagert ist, und zwischen einer Anfangsstellung, bei welcher es sich innerhalb der Wanne (10) befindet, und einer Endstellung, in welcher das Förderelement (21) über den Rand der Wanne (10) zumindest teilweise hinausragt, hin und her bewegbar ist, und wobei das Förderelement (21) eine Unterseite (52) aufweist, **dadurch gekennzeichnet, dass** die Unterseite (52) entlang des Randes der Wanne (10) gleitet beim Bewegen des Förderelements (21) zur Endstellung hin, und/oder das Förderelement (21) einen Schwerpunkt aufweist, der beim Bewegen des Förderelements (21) zur Endstellung hin eine selbsttätige Kippbewegung des Förderelements (21) bewirkt.

2. Abscheidevorrichtung nach Anspruch 1, wobei das Förderelement (21) durchlässig ausgestaltet ist, so dass aufgenommene Flüssigkeit herausfliessen kann, vorzugsweise weist das Förderelement (21) eine Vielzahl von Löchern (58) auf.

3. Abscheidevorrichtung nach einem der vorangehenden Ansprüche, wobei die mindestens zwei Achsen (23, 56) parallel zueinander angeordnet sind.

4. Abscheidevorrichtung nach einem der vorangehenden Ansprüche, wobei die Fördereinrichtung (20) einen verschwenkbaren Arm (22) aufweist, an welchem das Förderelement (21) vorzugsweise verschwenkbar angeordnet ist.

5. Abscheidevorrichtung nach Anspruch 4, wobei am Arm (22) ein Gegengewicht (24) angeordnet ist, um das Gewicht des Förderelements (21) zumindest teilweise zu kompensieren, vorzugweise ist das Förderelement (21) an dem einen Ende des Arms (22) und das Gegengewicht (24) am anderen Ende des Arms (22) angeordnet.

6. Abscheidevorrichtung nach einem der vorangehenden Ansprüche, wobei der Boden (10c) eine kreiszylindrische Fläche aufweist, entlang welcher das Förderelement (21) führbar ist.

7. Abscheidevorrichtung nach einem der vorangehenden Ansprüche, wobei der Antrieb ein Linearantrieb (25) ist, der vorzugweise verschwenkbar gelagert ist und/oder ein pneumatischer Zylinder ist.

8. Abscheidevorrichtung nach einem der vorangehenden Ansprüche, wobei in der Wanne (10) ein Rohr (41) angeordnet ist, über welches der Abfluss der Flüssigkeit erfolgt und welches bewegbar ist, um das Niveau der Flüssigkeit in der Wanne (10) einzustellen.

9. Abscheidevorrichtung nach einem der vorangehenden Ansprüche, wobei die Abscheidevorrichtung eine Steuerung aufweist, die so eingerichtet ist, dass die Bewegung des Förderelements (21) abgebremst wird, wenn es zur Endstellung hin bewegt wird.

10. Abscheidevorrichtung nach einem der vorangehenden Ansprüche, wobei das Förderelement (21) eine Schaufel ist, welche mit Löchern (58) versehen ist.

11. Abscheidevorrichtung nach einem der vorangehenden Ansprüche, mit einer ausserhalb der Wanne (10) angeordnete Rutsche (29), über welche Material aus dem Förderelement (21) herunterfallen kann.

12. Anlage mit einer Bearbeitungsmaschine, insbesondere eine Wasserstrahlschneidemaschine, und mit einer Abscheidevorrichtung nach einem der Ansprüche 1 bis 11.

13. Verwendung einer Abscheidevorrichtung nach einem der Ansprüche 1 bis 11 , zum Abscheiden von Material aus einer Flüssigkeit.

## Claims

1. Separation apparatus for separation of material from a liquid, with a tank (10), through which the liquid can be passed and which has a bottom (10c) on which the material collects during operation, and with a conveying device (20), which includes a conveying element (21), which can be guided along the bottom (10c) by means of a drive (25) and is configured to pick up material that has collected on the bottom and to convey it out of the tank (10), wherein the conveying element (21) is a scoop, which is swivel-mounted about at least two axes (23, 56), and can be moved back and forth between a starting position, in which it is situated within the tank (10), and an end position, in which the conveying element (21) projects at least partially over the edge of the tank (10) and wherein the conveying element (21) has an underside (52), **characterized in that** the underside (52) slides along the edge of the tank (10) when the conveying element (21) is moved toward the end position and/or the conveying element (21) has a center of gravity that causes an automatic tilting movement of the conveying element (21) when the conveying element (21) is moved toward the end position.

2. Separation apparatus according to claim 1, wherein the conveying element (21) is configured to be permeable, so that liquid being picked up can flow out, preferably, the conveying element (21) has a plurality of holes (58).

3. Separation apparatus according to one of the preceding claims, wherein the at least two axes (23, 56) are disposed parallel to one another.

4. Separation apparatus according to one of the preceding claims, wherein the conveying device (20) has a pivoting arm (22), on which, preferably, the conveying element (21) is arranged so as to pivot.

5. Separation apparatus according to claim 4, wherein a counterweight (24) is disposed on the arm (22), in order to compensate at least in part the weight of the conveying element (21), preferably, the conveying element (21) is disposed on the one end of the arm (22) and the counterweight (24) is disposed on the other end of the arm (22) .

6. Separation apparatus according to one of the preceding claims, wherein the bottom (10c) has a circular cylindrical surface, along which the conveying element (21) can be guided.

7. Separation apparatus according to one of the preceding claims, wherein the drive is a linear drive (45) that is preferably swivel-mounted and/or is a pneumatic cylinder.

8. Separation apparatus according to one of the preceding claims, wherein a pipe (41) is disposed in the tank (10), by way of which pipe the outflow of the liquid takes place, and which pipe can be moved to adjust the level of the liquid in the tank (10).

9. Separation apparatus according to one of the preceding claims, wherein the separation apparatus has a controller that is configured in such a manner that the movement of the conveying element (21) is slowed down when it is moved toward the end position.

10. Separation apparatus according to one of the preceding claims, wherein the conveying element (21) is a scoop, which is provided with holes (58).

11. Separation apparatus according to one of the preceding claims, having a chute (29) disposed outside of the tank (10), by way of which chute material can fall down out of the conveying element (21).

12. System having a processing machine, particularly a water-jet cutting machine, and a separation apparatus according to one of claims 1 to 11.

13. Use of a separation apparatus according to one of claims 1 to 11 for separating material from a liquid.

## Revendications

1. Dispositif de séparation pour la séparation de matière à partir d'un liquide, comprenant un bac (10) à travers lequel le liquide peut être conduit et qui présente un fond (10c) sur lequel la matière s'accumule en cours de fonctionnement, et un dispositif de transport (20) qui présente un élément de transport (21) déplaçable le long du fond (10c) au moyen d'un entraînement (25) et adapté à recueillir de la matière accumulée au fond et à l'évacuer du bac (10), l'élément de transport (21) étant une pelle montée pivotante autour d'au moins deux axes (23, 56) et étant déplaçable en mouvement alternatif entre une position initiale où il se trouve à l'intérieur du bac (10) et une position extrême où l'élément de transport (21) dépasse au moins partiellement du bord du bac (10), et l'élément de transport (21) présentant un côté inférieur (52), **caractérisé en ce que** le côté inférieur (52) glisse le long du bord du bac (10) lorsque l'élément de transport (21) est déplacé vers la position extrême et/ou l'élément de transport présente un centre de gravité qui produit un mouvement de basculement automatique de l'élément de transport (21) lorsque l'élément de transport (21) est déplacé vers la position extrême.

2. Dispositif de séparation selon la revendication 1, où l'élément de transport (21) est conçu de manière perméable, de sorte que du liquide entraîné peut s'écouler, l'élément de transport (21) présentant préférablement une multitude de trous (58).

3. Dispositif de séparation selon l'une des revendications précédentes, où lesdits au moins deux axes (23, 56) sont parallèles l'un à l'autre.

4. Dispositif de séparation selon l'une des revendications précédentes, où le dispositif de transport (20) présente un bras (22) pivotant auquel l'élément de transport (21) est préférablement agencé de manière pivotante.

5. Dispositif de séparation selon la revendication 4, où un contrepoids (24) est agencé au bras (22) afin de compenser au moins partiellement le poids de l'élément de transport (21), l'élément de transport (21) étant préférablement agencé à l'une des extrémités du bras (22) et le contrepoids (24) à l'autre extrémité du bras (22).

6. Dispositif de séparation selon l'une des revendications précédentes, où le fond (10c) présente une surface cylindrique circulaire le long de laquelle l'élément de transport (21) est déplaçable.

7. Dispositif de séparation selon l'une des revendications précédentes, où l'entraînement est un actionneur linéaire (25) qui est préférablement monté de manière pivotante et/ou qui est un cylindre pneumatique.

8. Dispositif de séparation selon l'une des revendications précédentes, où un tuyau (41) est agencé dans le bac (10), par lequel le liquide s'écoule et qui est déplaçable afin de régler le niveau du liquide dans le bac (10) .

9. Dispositif de séparation selon l'une des revendications précédentes, où le dispositif de séparation comprend une commande qui est agencée de telle manière que le mouvement de l'élément de transport (21) est freiné lorsqu'il est déplacé vers la position extrême.

10. Dispositif de séparation selon l'une des revendications précédentes, où l'élément de transport (21) est une pelle pourvue de trous (58).

11. Dispositif de séparation selon l'une des revendications précédentes, comprenant une glissière (29) agencée à l'extérieur du bac (10) et par l'intermédiaire de laquelle de la matière peut chuter hors de l'élément de transport (21).

12. Installation comprenant une machine de traitement, plus particulièrement une machine de découpe par jet d'eau, et un dispositif de séparation selon l'une des revendications 1 à 11.

13. Utilisation d'un dispositif de séparation selon l'une des revendications 1 à 11 pour la séparation de matière à partir d'un liquide.
